# EUROPÄISCHE PATENTSCHRIFT

(11) **EP 0 382 330 B1**
(45) Veröffentlichungstag und Bekanntmachung des Hinweises auf die Patenterteilung: **12.01.1994**
(21) Anmeldenummer: 90250040.4
(22) Anmeldetag: 08.02.1990
(51) Int. Cl.: B01D 46/52, B01D 46/10

(54) **Filtereinsatz und Verfahren zu seiner Herstellung**
Filter cartridge and method of manufacturing same
Cartouche filtrante et son procédé de fabrication

(30) Priorität: 08.02.1989 DE 3903697; 19.05.1989 DE 3916838
(43) Veröffentlichungstag der Anmeldung: 16.08.1990
(73) Patentinhaber: Lippold, Hans-Joachim, Dr., D-14089 Berlin (DE)
(72) Erfinder: Lippold, Hans-Joachim, Dr., D-14089 Berlin (DE)

(56) Entgegenhaltungen:
- DE-A- 2 138 412
- DE-B- 2 835 181
- FR-A- 2 427 123
- FR-A- 2 470 630
- US-A- 3 531 920

## Beschreibung

Die Erfindung betrifft einen Filtereinsatz der im Oberbegriff des Anspruchs 1 angegebenen Art sowie ein Verfahren zu seiner Herstellung nach dem Oberbegriff des Anspruchs 11 bzw. 16.

Derartige Filtereinsätze sind in US-A-3531920 beschrieben. Sie werden zur Filterung von verschiedenen Medien eingesetzt. Dabei besteht der Filtereinsatz aus einem durchlässigen Material, vorzugsweise einem Mikro-Faservlies, das im Zick-Zack gefaltet ist und eine insbesondere quaderförmige Ausbildung aufweist. Beim Filtervorgang tritt das zu filternde Medium von einem Kantenbereich der Zick-Zack-Faltung in Richtung auf den gegenüberliegenden Kantenbereich der Faltung durch den Einsatz hindurch. Aus den durch Zick-Zack-Faltung gebildeten Faltenwänden treten eingeprägte Vorsprünge hervor, die vorzugsweise an beiden Seiten der Faltwände aus der Ebene der Faltenwände hervortreten. Die Vorsprünge sind dabei so angeordnet, daß jedem erhabenen Vorsprung in der Faltenwand ein entsprechender ebenfalls erhabener Vorsprung in der benachbarten Faltenwand zugeordnet ist, derart, daß die einander zugeordneten Vorsprünge durch die Zick-Zack-Faltung aufeinander zu liegen kommen und sich im Bereich der Berührungsflächen abstützen.

Auf diese Weise sollen die Filterwände in einem vorbestimmten Abstand gehalten werden und einen gleichmäßigen Durchtritt des Mediums durch die Wandungen gewährleisten.

Nachteilig ist dabei, daß es zu Druckschwankungen beim Durchtritt des zu filternden Mediums kommt, da die Wandungen nicht in einem exakt geometrisch vorbestimmten Abstand zueinander gehalten werden können. Dies ist auf die durch den Strömungswiderstand auftretenden Kräfte zurückzuführen, die den Filtereinsatz aufgrund nicht ausreichender Stabilität verformen. Um den erhöhten Strömungswiderstand auszugleichen, ist eine stärkere Förderleistung für das zu filternde Medium erforderlich. Dadurch wird die Lebensdauer des Filtereinsatzes herabgesetzt. Hinzu kommt auch noch, daß die entsprechenden Antriebsmittel mit zunehmender Leistung vermehrte Geräusche verursachen.

Weiterhin können die Vorsprünge einer Faltenwand nur eine geringe Höhe einnehmen, da durch das Einprägen der Vorsprünge in das Filterelement die Wandungen der Vorsprünge dünner werden. Desweiteren sind aufgrund der mangelnden Stabilität der Vorsprünge vermehrt Vorsprünge angeordnet, die jedoch die Filterfläche für den Durchtritt des zu filternden Mediums verkleinerern. Der Strömungswiderstand wird dadurch heraufgesetzt. Daraus resultieren ebenso die erhöhte Absaugleistung und die damit verbundene vermehrte Geräuschentwicklung der Filteranlage sowie eine verringerte Lebensdauer des Filtereinsatzes.

Eine Versteifung durch Imprägnieren oder Beschichten des gesamten Filtermaterials - wie in US-A-3531920 vorgeschlagen - führt zu einer inakzeptablen Verschlechterung des Filtervermögens.
In DE-B-2835181 wird eine Fixierung von Filtermateriallagen mittels Klebebändern vorgeschlagen, die jedoch für den gattungsgemäßen Filtereinsatz nicht funktioniert.

Der Erfindung liegt die Aufgabe zugrunde, einen Filtereinsatz der eingangs genannten Gattung beidem die Stabilität und die Aussteifung des Filtereinsatzes erhöht und der Strömungswiderstand möglichst weitgehend vermindert ist, sowie ein Verfahren zu dessen Herstellung anzugeben.

Diese Aufgabe wird durch einen Filtereinsatz mit den Merkmalen des Anspruchs 1 sowie ein Verfahren mit den Merkmalen des Anspruchs 11 oder 16 gelöst.

Der Erfindung liegt die Erkenntnis zugrunde, daß der Filtereinsatz in einer exakten geometrischen Anordnung ausgebildet ist und daß diese auch im Betrieb durch die auftretenden Kräfte erhalten bleibt. Deshalb sollte die Stabilität und Aussteifung des Filtereinsatzes erhöht werden, insbesondere die Stabilität der in die Faltenwände eingeprägten Vorsprünge. Ein Verrutschen der aneinander anliegenden Vorsprünge soll von vornherein verhindert und die Anzahl der notwendigen Vorsprünge herabgesetzt werden. Dabei soll bei insgesamt laminarer Strömung die gesamte Fläche des Filtermaterials gleichmäßig ausgenutzt werden und entlang des Transportwegs des zu filternden Mediums sollen keine Druckschwankungen auftreten, welche den Strömungswiderstand in unerwünschter Weise vergrößern.

Gemäß der Erfindung ist dabei wesentlich, daß die einander zugewandten Vorsprünge einander benachbarter Faltenwände miteinander verklebt sind. Auf diese Weise erhöht sich die Stabilität und die Aussteifung des Filtereinsatzes. Ein durch die erhöhte Stabilität und Aussteifung ermöglichte verringerte Anzahl von Vorsprüngen erweist sich als zusätzlich vorteilhaft, da ein günstiges Verhältnis der wirksamen Filterfläche zur Gesamtoberfläche der Faltenwände erreicht wird.

Auf diese Weise lassen sich Filtereinsätze als Einwegartikel erzeugen, welche kostengünstig herstellbar sind und eine lange Standzeit aufweisen. Die aus Vliesmaterial bestehenden Filterwandungen brauchen nicht mit festen Abstandshaltern oder Aussteifungen aus Fremdmaterial versehen zu werden.

Bei den Weiterbildungen der Erfindung ist insbesondere vorteilhaft, daß die einander zugewandten Vorsprünge der benachbarten Faltenwände aneinander anliegende Flächenbereiche aufweisen. Diese aneinander anliegenden Bereiche sind bei einer Weiterbildung auch linienförmig ausgebildet, wobei der Klebstoff im Bereich dieser Linien aufgetragen ist. Bei weiteren Ausführungen sind die die aneinander angrenzenden Bereiche enthaltenden bzw. diesen benachbarten Bereiche verrundet oder abgeschrägt. Somit lassen sich im Filtereinsatz unterschiedliche Strömungsbedingungen erzeugen und die entsprechende Stabilität der Anordnung gewährleisten.

Insbesondere erweist es sich als günstig, die Klebebeschichtung über die Oberfläche des Vorsprungs einschließlich der Seitenwandungen aufzubringen. Dadurch wird die Festigkeit der einzelnen Vorsprünge heraufgesetzt. Als günstig erweist sich weiterhin, die örtliche Dicke der Klebebeschichtung mit dem Abstand der Erhebung der Vorsprünge, bezogen auf die Ebene der Faltenwand, zu verstärken, da dadurch, die durch die Prägung entstandenen Wandungen der Vorsprünge enstprechend verfestigt und stabilisiert werden. Günstig ist dabei, daß die damit enstandene Materialschwächung nicht nur ausgeglichen wird, sondern ein Filterkörper von insgesamt großer Steifigkeit erzielbar ist, der nicht durch zusätzliche Maßnahmen verfestigt werden muß.

In einer weiteren bevorzugten Ausführung sind die Faltenkanten im Faltengrund trapezartig verbreitert ausgebildet. Dadurch wird die Druckverteilung zusätzlich homogenisiert, insbesondere kann die Höhe der Faltenwand damit größer als bisher ausgelegt werden, ohne daß nachteilige hohe Druckunterschiede beim Durchtritt des zu filternden Mediums im Bereich der Durchtrittsfläche des Filtermaterials entstehen. Diese geringen Druckunterschiede sind insbesondere auch auf die geringe Materialanhäufung im Bereich der Faltenkante bzw. auf die Möglichkeit zurückzuführen, daß dem zu filternden Medium in diesem Bereich eine größere Filterfläche zur Verfügung steht. Weiterhin bleibt die für den Filtervorgang günstige laminare Strömung erhalten. Die größere Höhe der Faltenwände erweitert nicht nur die Filterfläche, sondern verbessert auch die Filtereigenschaften insgesamt, hierbei insbesondere den Abscheidegrad. Auch ergibt sich durch die verbreiterte Ausbildung der Faltenkante mit der größeren Höhe ein wesentlich günstigeres Verhältnis der Druckdifferenz zur Faltenhöhe. Daraus resultieren größere Stabilität und eine erhöhte Lebensdauer des jeweiligen Filtereinsatzes.

Bei einer weiteren vorteilhaften Ausführung der Erfindung erweist es sich als günstig, daß das Klebstoffmaterial netz- bzw. gespinstartig auf dem Filtermedium, insbesondere im Bereich der Vorsprünge, vorgesehen ist. Dadurch wird ein vollständiges verdichten der Oberfläche des Filtermediums verhindert. Dennoch ist das Filtermaterial in ausreichender Weise ausgesteift und die Filtereigenschaften sind in diesem Bereich nur gering beeinträchtigt. Weiterhin wird Klebstoffmaterial eingespart, so daß die Materialkosten sinken.

Ein erfindungsgemäßes Verfahren zum Aufbringen der Klebebeschichtung ist das Aufwalzen, wobei die Walzen beidseitig des folienförmigen Vlieses angebracht sind. Beim Durchlaufen des Vlieses durch den Walzenspalt können wahlweise die maximalen Erhebungen mit aushärtbarem Klebstoff beschichtet werden oder die ganze Vorsprungoberfläche samt Seitenwandungen. Bei letzterem Verfahren sind in den Walzenwandungen den Vorsprüngen angepaßte Hohlformen angeordnet.

Ein zweites erfindungsgemäßes Verfahren beruht auf dem Aufspritzen der Klebebeschichtung in einem Gaswirbel.

In einer weiteren bevorzugten Ausführung des Filtereinsatzes weist das Filtermaterial mindestens einen Anteil von thermoplastischen Fasern auf, so daß gezielt eine bleibende Verformung und Bereiche höherere Steifigkeit durch Wärmebehandlung, auch in Form einer Verschweißung des Filtermaterials, innerhalb der Filterschicht herstellbar ist. Dabei werden trotz der durch das Verschweißen enstehenden erhöhten Materialdichte die Filtereigenschaften als solche nicht bzw. in den verformten Bereichen nur geringfügig beeinträchtigt. Die Filtereigenschaften sind aber in jedem Fall weitaus besser als bei herkömmlichen mit Binder versehenen Filtermaterialien. Durch die Möglichkeit, einzelne Filterlagen zu verbinden und somit ein Lösen der einzelnen Lagen voneinander zu verhindern, aber auch aufgrund der verbesserten hohen örtlichen Quer- bzw. Längssteifigkeit sind die erfindungsgemäß behandelten Filtermedien faltbar und für übliche Filtereinsätze geeignet.

Die aus Kunststoffasermaterialien bestehenden Filtermedien weisen in vorteilhafter Weise einen höheren Abscheidegrad und geringere Druckdifferenzen gegenüber herkömmlichen Glasfasermaterialien auf. Daraus resultiert eine geringere notwendige Förderleistung und eine höhere Lebensdauer der Filtereinsätze. Hinzu kommt auch noch, daß die entsprechenden Antriebsmittel mit abnehmender Leistung weniger Geräusche verursachen. Vorteilhaft ist weiterhin, daß durch das Einprägen der Vorsprünge in das Filtermedium deren Wandungen trotz geschwächter Wandstärke ein gute Stabilität aufweisen. Damit kann trotz einer verringerten Zahl von Vorsprüngen die Filterfläche noch vergrößert werden. Der Strömungswiderstand wird dabei herabgesetzt und es sind homogene Strömungsverhältnisse gewährleistet. Daraus resultieren sowohl eine geringere Absaugleistung als auch eine reduzierte Geräuschentwicklung der Filteranlage sowie eine erhöhte Lebensdauer des Filtereinsatzes.

Durch den thermoplastischen, bereichsweise verschweißten Faseranteil wird in vorteilhafter Weise die Stabilität und die Aussteifung des Filtereinsatzes an vorbestimmten Bereichen, insbesondere an Vorsprüngen, entsprechenden Übergangsbereichen und Faltenkanten, erhöht. Die dadurch erzielbare verringerte Anzahl von Vorsprüngen erweist sich als zusätzlich vorteilhaft, da ein günstiges Verhältnis der wirksamen Filterfläche zur Gesamtoberfläche der Faltenwände erreicht wird. Die Filtereinsätze lassen sich somit auch als Einwegartikel erzeugen, welche kostengünstig herstellbar sind und eine lange Standzeit aufweisen. Die aus thermoplastischem Werkstoff bestehenden Filterwandungen brauchen desweiteren nicht mit festen Abstandshaltern oder Aussteifungen aus Fremdmaterial versehen zu werden.

Die Fasern sind im verschweißten Zustand ohne wesentliche Hohlräume miteinander verbunden. Das durchlässige Filtermedium ist mehrlagig ausgebildet, wobei einzelne Lagen bereichsweise miteinander verschweißt sind, so daß ein Ablösen der einzelnen Lagen verhindert wird. Weiterhin ist vorteilhaft, wenn das durchlässige Filtermedium Fasern, mindestens aber Faseranteile, aus Polypropylen, Cellulose, Polycarbonat, Polyamid, Teflon und/oder Polyester enthält. Durch diesen Aufbau ist ein ausreichend hoher thermoplastischer Werkstoffanteil innerhalb des Filtermediums vorhanden und die Filtereigenschaften können den Anforderungen angepaßt werden. Als günstig erweist es sich auch, wenn die nahtförmigen verschweißten Bereiche in Form eines Filmscharniers ausgebildet werden.

Andere vorteilhafte Weiterbildungen der Erfindungen sind in den Unteransprüchen gekennzeichnet bzw. werden nachstehend zusammen mit der Beschreibung der bevorzugten Ausführungen der Erfindung anhand der Figuren näher dargestellt. Es zeigen:
Figur 1a eine perspektivische Ansicht eines Teils des Ausführungsbeispiels des erfindungsgemäßen Filtermaterials,
Figur 1b eine entsprechende Draufsicht,
Figur 2 einen Ausschnitt A als vergrößerte Teildarstellung von Figur 1a,
Figur 3 eine perspektivische Ansicht eines Teils des Filterelements in ungefaltetem Zustand,
Figur 4 eine perspektivische Draufsicht des zu einem Filtereinsatz gefalteten Ausführungsbeispiels unter Darstellung von die Falten arretierenden Verbindungsmitteln,
Figur 5 einen Querschnitt durch zwei aneinander anliegende Vorsprünge von Faltenwänden, die miteinander verklebt sind, in vergrößerter Darstellung,
Figur 6 die Herstellung des Filtermediums in perspektivischer Darstellung,
Figur 7 eine perspektivische Darstellung eines weiteren Herstellungsverfahrens des Filtermediums, sowie
Figur 8 eine perspektivische Darstellung eines dritten Herstellungsverfahrens des Filtermediums.

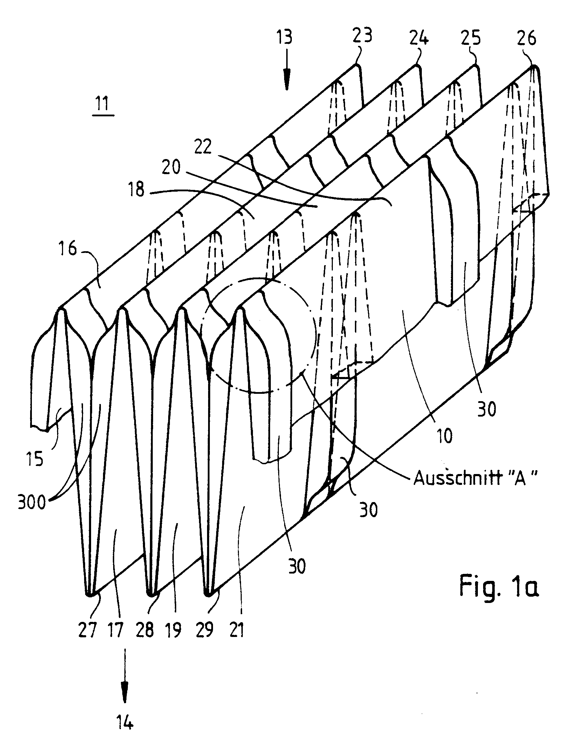

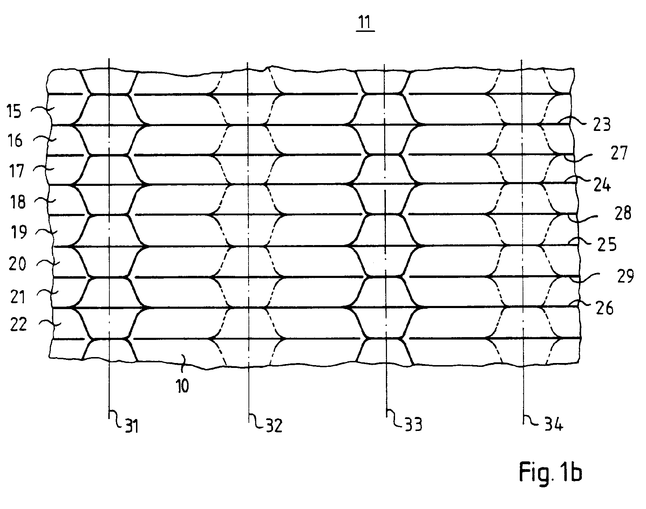

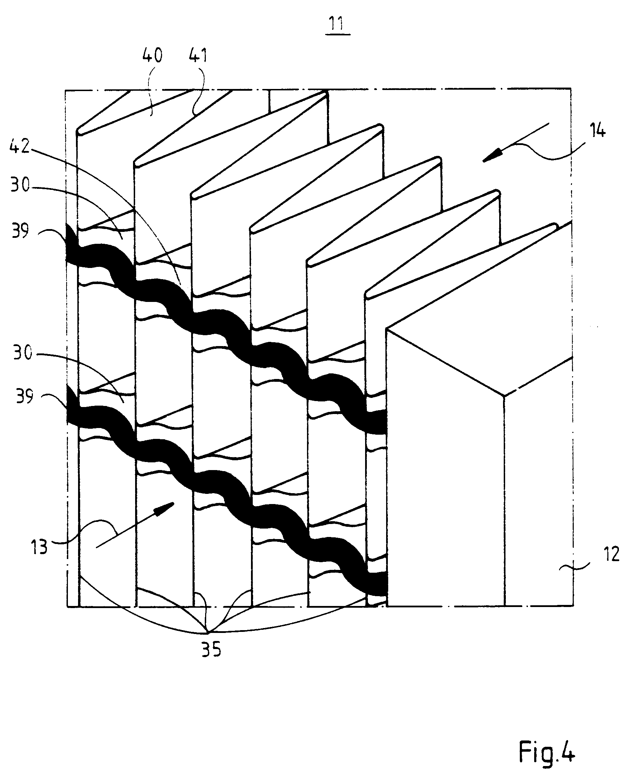

In den Figuren 1a und b und in Figur 4 ist jeweils ein Ausschnitt eines Filtermaterials 10, bestehend aus einem Filtervlies, dargestellt, das durch Zick-Zack-Faltung zu einem im wesentlichen quaderförmigen Filtereinsatz 11 geformt ist. Bei diesem Filtervlies handelt es sich insbesondere um ein Schwebstoffvlies. Grundsätzlich ist jedes Filtermaterial geeignet, das sich entsprechendend formen läßt.

Der quaderförmige Filtereinsatz 11 paßt in bekannter Weise in einen Rahmen 12, der den Filtereinsatz zusätzlich stabilisiert. Der Filtereinsatz kann - je nach Anwendungsfall - gegebenenfalls auch ohne Rahmen ausgebildet sein, wobei die Außenabmessungen an die für den Filtereinsatz vorgesehene Ausnehmung dem entsprechenden Aufnahmeteil angepaßt sind. Der Filtereinsatz wird von einer Eintrittsseite 13 durch das zu filternde Medium angeströmt, von wo das Strömungsmittel durch das Filtermaterial in Richtung einer gegenüberliegenden Austrittsseite 14 strömt, von der es über eine geeignete Abfuhrleitung abgezogen wird oder frei abströmt.

Das Filtermaterial 10, in Figur 1a und b, ist zick-zackförmig gefaltet, wobei eine Anzahl von Faltenwänden 15 bis 22 jeweils eine Falte bilden. Die Faltenwände 15 und 16 sind durch einen Falz 23 auf der Eintritteseite 13, die angeströmt wird, miteinander verbunden. Ebenso sind die Faltenwände 17 und 18 durch einen Falz 24, die Faltenwände 19 und 20 durch einen Falz 25 und die Faltenwände 21 und 22 durch einen Falz 26 miteinander verbunden; wohingegen die Faltenwände 16 und 17 durch einen Falz 27 auf der Seite 14 miteinander verbunden sind. Ebenso sind die Faltenwände 18 und 19 durch einen Falz 28 und die Faltenwände 20 und 21 durch einen Falz 29 auf der Austrittsseite 14 miteinander verbunden. Durch diese Faltung wird die Filtereinsatzoberfläche vergrößert und der Abscheidegrad des Filtereinsatzes 11 heraufgesetzt. Diese Verbesserung resultiert aus einer Optimierung der Geschwindigkeitsverteilung und Senkung der Druckdifferenz. Die Lebensdauer ist gegenüber herkömmlichen entsprechenden Filtern erhöht.

Die Faltenwände 15 bis 22 weisen materialeinheitliche Vorsprünge 30 auf, die durch Prägung des Filtermateriales (Schwebstoffiltervlieses) ausgebildet wurden. Die Vorsprünge 30 weisen in Bewegungsrichtung des zu filternden Mediums eine konstante Breite auf. Dabei ist die Breite geringer als die Höhe der maximalen Erhebungen der Vorsprünge bezogen auf die Ebene der Faltenwand. Die Seitenwandungen 300 der Vorsprünge 30 erstrecken sich senkrecht zu den die Faltenwände 15 bis 22 miteinander verbindenden Falzen 23 bis 29. Dabei weisen die Vorsprünge 30, ausgehend von den Falzen 27 bis 29 in Richtung auf die Falze 23 bis 26, eine zunehmende Höhe bezogen auf die Ebene der Faltenwände 15 bis 22 auf.

Der Berührungsbereich ist in Form einer rechteckigen Berührungsfläche der Vorsprünge 30 ausgebildet. Dadurch erhöht sich die Stabilität des Filtereinsatzes. Durch die Prägung der Faltenwände 15 bis 22 hat sich die Oberfläche des Filterelements entsprechend vergrößert und der zusätzliche benötigte Werkstoff wurde aus der zu prägenden Faltenwand durch den Prägevorgang gezogen. Dadurch sind die Wandungen der Vorsprünge 30 entsprechend dünner ausgebildet. Der aufgetragene Kleber verfestigt gerade diesen Bereich zusätzlich, so daß die durch die Verformung eingetretene Materialschwächung beseitigt bzw. je nach Kleberauftrag überkompensiert ist.

Die Vorsprünge 30 benachbarter Faltenwände 15 bis 22 liegen zur Abstandssicherung und Aussteifung aneinander an. Dabei sind z.B. die aneinander anliegenden Vorsprünge 30 zweier über einen Falz 27 verbundenen Faltenwände 16 und 17 in Richtung auf den jeweils gegenüberliegenden Falz 23 und 24 in ihrer Höhe, bezogen auf die jeweilige Faltenwand 16 oder 17, zunehmend ausgebildet, so daß zwischen diesen Faltenwänden 16 und 17 ein in Bewegungsrichtung des Mediums abnehmender bzw. nach Durchtritt des Mediums durch die jeweilige Faltenwand 16 oder 17 anwachsender Abstand festliegt. Auf diese Weise ist sichergestellt, daß bei insgesamt laminarer Strömung die gesamte Fläche des Filtermaterials gleichmäßig ausgenutzt wird und entlang des Transportwegs des Mediums keine Druckschwankungen auftreten, welche den Strömungswiderstand in unerwünschter Weise vergrößern.

Die Vorsprünge 30 sind entlang von Geraden 31 bis 34, die zueinader gleichen Abstand aufweisen, angeordnet. Dabei treten die Vorsprünge derart abwechselnd aus den Seiten 13 und 14 hervor, daß die Vorsprünge 30 auf den Geraden 31 und 33 aus der Eintrittsseite 13 hervortreten und die weiteren Vorsprünge 30, die entlang der Geraden 32 und 34 angeordnet sind, aus der Austrittsseite 14 hervortreten. Durch diese abwechselnde Anordnung der Vorsprünge 30 wird die Stabilität erhöht, da sowohl auf der Eintrittsseite 13 als auch auf der Austrittsseite 14 die Faltenwände in einem zueinander vorbestimmten Abstand gehalten werden.

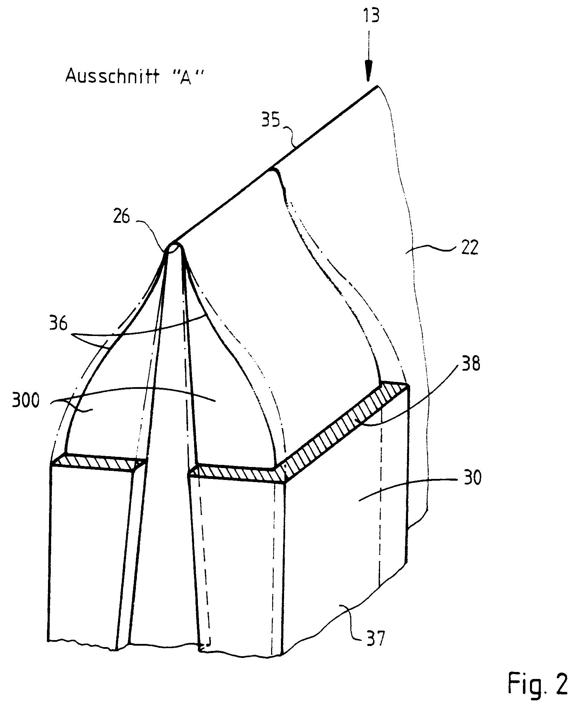

Der in Figur 2 dargestellte vergrößerte Ausschnitt A aus Figur 1 stellt einen Übergangsbereich 36 von der durch den Falz 26 gebildeten Faltenkante 35 zu dem aus der Faltenwand 22 hervortretenden Vorsprung 30 dar.

Der Bereich des Übergangs 36 erstreckt sich von demjenigen Ende des Vorsprungs 30, das den größten Abstand bezogen auf die Ebene der Faltenwand aufweist, in Richtung auf die Faltenkante 35 in die Ebene der Faltenwand 22. Dabei weist der Übergangsbereich 36 einen Bereich größerer Steigung auf, der zwischen zwei Bereichen geringerer Steigung angeordnet ist. Insbesondere gehen die Bereiche geringerer Steigung kontinuierlich in angrenzende ebene Bereiche über. Eine rechteckige Fläche 37 ist ein Teil der Berührfläche benachbarter aneinander anliegender Vorsprünge 30 der Faltenwände. Die Übergangsbereiche 36 sind strömungsgünstig ausgebildet, so daß der Strömungswiderstand, der u.a. durch die Vorsprünge hervorgerufen wird, sich verringert.

Über dem Vorsprung 30 und dem Übergangsbereich 36 ist eine den Vorsprung 30 und den Übergangsbereich 36 aussteifende, aushärtbare Klebebeschichtung 38 angeordnet, die am Ende des Vorsprungs 30 in Richtung auf die Faltenkante 35 aufgebrochen dargestellt ist, um die Ausbildung und Anordnung der einzelnen konstruktiven Elemente besser sichtbar zu machen. Die Klebebeschichtung 38 kann wahlweise auch als Tränkung 38 ausgebildet sein.

Die Klebebeschichtung 38 erstreckt sich auch auf die Seitenwandungen 300 der Vorsprünge 30 und des Übergangsbereichs 36. Die örtliche Dicke der Klebebeschichtung 38 nimmt dabei mit dem Abstand der Erhebung der Vorsprünge 30 bezogen auf die der Faltenwand 22 zu. Dadurch wird die durch die Prägung verursachte abnehmende Wanddicke der Vorsprünge 30 und damit auch die abnehmende Stabilität der Vorsprünge 30 durch die aushärtbare und die Vorsprünge aussteifende Klebebeschichtung 38 ausgeglichen. Die Vorsprünge erhalten durch die Klebebeschichtung 38 die für die beim Filtriervorgang auftretenden Kräfte benötigte Festigkeit und Stabilität.

Durch die aufgebrachte Klebebeschichtung 38 sind die benachbarten, aneinander angrenzenden Vorsprünge 30 miteinander verklebt. Dadurch wird der Filtereinsatz 11 stabilisiert und hält gleichzeitig seine Quaderform selbsttragend, ohne zusätzlichen Rahmen. Dies vereinfacht den Einbau der Filtereinsätze 11 in die bekannten Filtergehäuse 12 erheblich.

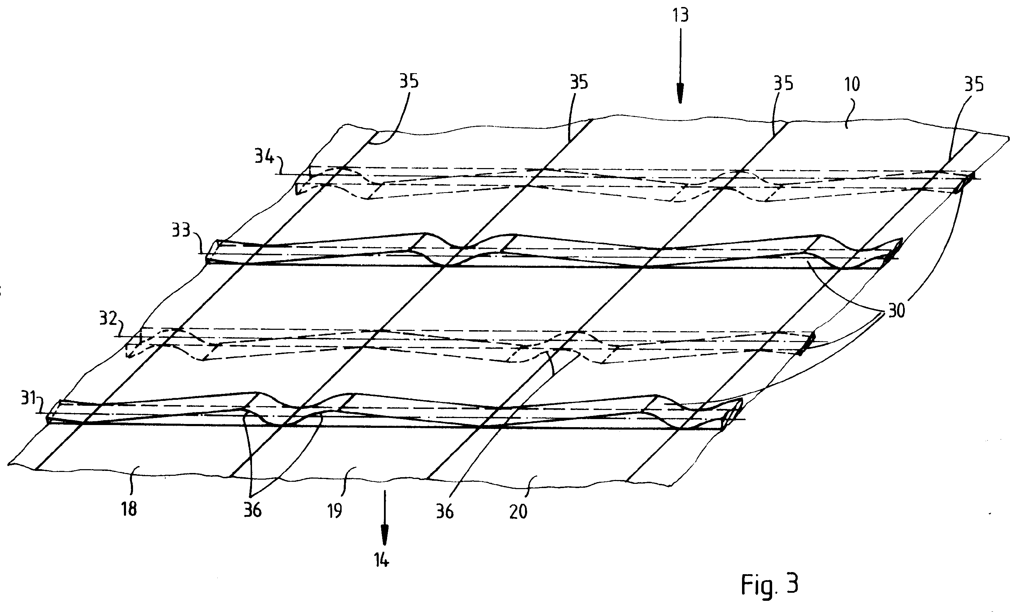

In Figur 3 ist in einer perspektivischen Ansicht ein Teil des Filtermaterials 10 in nicht gefaltetem Zustand dargestellt.

Es sind die abwechselnd aus der Eintrittsseite 13 und Austrittsseite 14 hervortretenden Vorsprünge 30 erkennbar. Die Vorsprünge 30 werden mittels zweier beidseitig des Filtermaterials 10 angeordneter Walzen, die hier nicht sichtbar sind, eingeprägt. Das Filtermaterial 10 läuft dabei folienartig durch die Prägewalzen. Es entstehen dadurch auf den Geraden 31 bis 34 fortlaufend eingeprägte Vorsprünge 30 mit den entsprechenden Übergangsbereichen 36 und den Faltenkanten 35. Anschließend läuft das Filterelement 10 wiederum durch beidseitig des Filtermaterials 10 angeordnete Walzen, die nicht sichtbar sind, die Hohlformen an ihren Walzwandungen aufweisen, die der Form der eingeprägten Vorsprünge 30 angepaßt sind. Die aushärtbare Klebebeschichtung 38 wird durch den Walzvorgang auf die Vorsprünge 30 und deren Seitenwandungen 300 aufgetragen. Durch die Walzenprägung der Vorsprünge 30 werden die Filterelemente 10 kostengünstig hergestellt und auch das Aufbringung der aushärtbaren Klebebeschichtung 38 erfolgt durch ein fertigungstechnisch vorteilhaftes Aufwalzen.

In Figur 4 ist ein Filtereinsatz 11 im Ausschnitt dargestellt, an dem zwei zueinander parallel verlaufende, den Filtereinsatz 11 stabilisierende Fäden 39 angeordnet sind. Die Fäden 39 verlaufen senkrecht zu den Faltenkanten 35 und verbinden die Faltenkanten 35 auf dem in der Draufsicht kürzesten Weg miteinander. Dabei liegen die Fäden jeweils an der Oberfläche des Filtereinsatzes 11 an. Ausgehend von der Faltenkante 35 auf der einen Faltenwand 40 verlaufen die Fäden 39 bis zu jeweils einem Vorsprung 30 dieser Faltenwand 40, der an jeweils einem Vorsprung 30 der gegenüberliegenden Faltenwand 41 anliegt. Die Fäden 39 verlaufen dann jeweils weiter auf der in Richtung der Faltenkante 35 weisenden Fläche 42 der Vorsprünge 30, bis zur benachbarten Faltenwand 41 und auf dieser bis zur nächsten Faltenkante. Die Fäden 39 sind endlos über die Faltenkanten 35 und die den Filtereinsatz 11 nach außen begrenzenden, hier nicht sichbaren, Faltenwände verlaufend angeordnet. Der Filtereinsatz 11 wird dadurch leicht handhabbar und erhält eine große Stabilität, so daß auch größere Ausführungen möglich sind.

Die Fäden bestehen aus einem homogenen schäumenden, klebenden und/oder sich verfestigenden Kunststoff bzw. auch Streifenmaterial aus Karton und dergleichen. Somit sind die Fäden 39 an dem auf den Filtereinsatz 11 aufliegenden Bereichen mit dem Filtereinsatz 11 verklebt. Ein Verrutschen der Fäden 39 wird dadurch verhindert und die Stabilität des Filtereinsatzes 11 heraufgesetzt. Die den Filtereinsatz 11 stabilisierenden Fäden 39 können bevorzugt im Bereich der den Filtereinsatz 11 nach außen begrenzenden, hier nicht sichtbaren, Faltenwände als Führung zum Einschieben des Filtereinsatzes in ein Filtergehäuse ausgebildet sein. Ein bequemes Auswechseln des Filtereinsatzes 11 ist dadurch möglich.

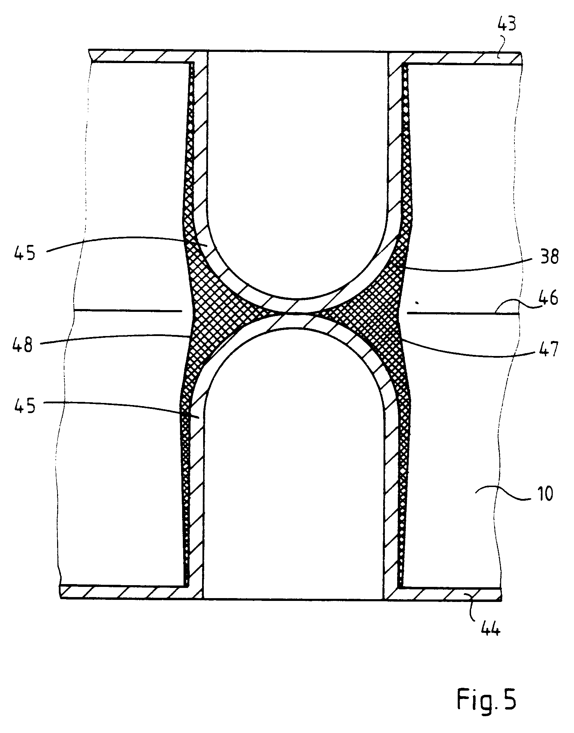

In Figur 5 sind zwei aneinander anliegende Vorsprünge 45 im Querschnitt vergrößert dargestellt, die in Faltenwände 43 und 44 eingeprägt sind. Die Vorsprünge 45 sind ausgehend von einem Falz 46 in Richtung auf die, hier nicht sichtbaren, gegenüberliegenden Falze mit zunehmender Höhe in bezug auf die jeweilige Ebene der Faltenwände 43 und 44 ausgebildet. Die Breite der Vorsprünge 45 ist konstant. Dabei ist diese Breite geringer als die Höhe der maximalen Erhebungen der Vorsprünge 45 bezogen auf die jeweiligen Faltenwände 43 und 44. Somit weisen die Vorsprünge 45 im wesentlichen die Eigenschaften der bereits beschriebenen Vorsprünge 30 auf. Der Unterschied liegt jedoch in den runden Ausformungen der Vorsprünge 45. Wahlweise können die Vorsprünge 45 auch abgeschrägt sein.

Bei der Klebebeschichtung 38 nimmt auch bei diesem erfindungsgemäßen Ausführungsbeispiel die örtliche Dicke mit dem Abstand der Erhebung der Vorsprünge 45 bezogen auf die jeweiligen Faltenwände 43 und 44 zu. Die Vorsprünge 45 berühren sich linenförmig und die Klebebeschichtung 38 wird mit dem aneinanderdrücken der Vorsprünge 45 seitlich der Berührlinie angeordnet, so daß die Klebebeschichtung 38 strömungsgünstige Seitenwandungen 47 und 48 bildet. Durch diese Ausbildung der Klebebeschichtung wird der Filtereinsatz 11 stabilisiert, so daß der Abstand zwischen den Geraden 31 bis 34, auf denen die Vorsprünge 30 bzw. 45 angeordnet sind, heraufgesetz wird. Durch die strömungsgünstigen Seitenwandungen 47 und 48 strömt das zu filtrierende Medium laminar. Der Strömungswiderstand vermindert sich ebenfalls durch eine geringere Anzahl von Vorsprüngen und damit vermindert sich auch die zum Absaugen bzw. Durchdrücken benötigte Energie.

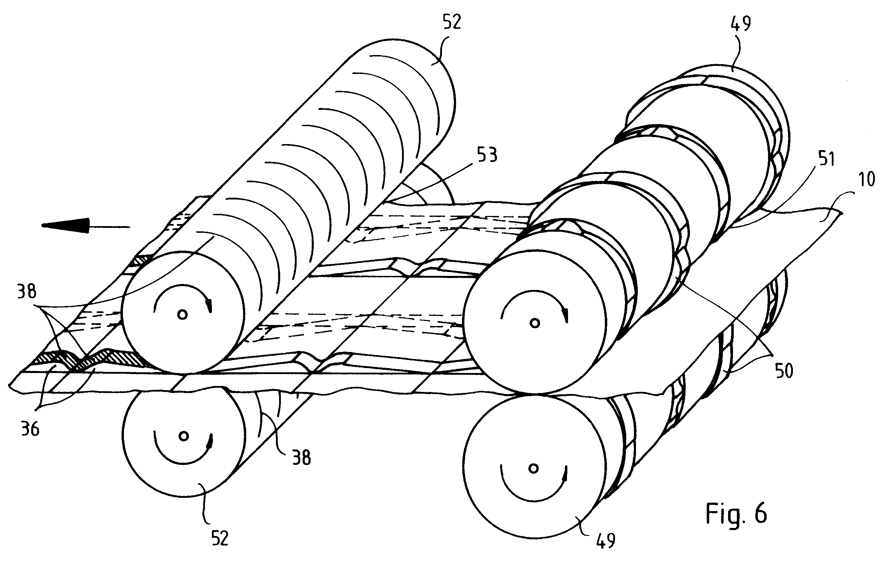

In Figur 6 ist ein Verfahren zur Herstellung eines Filtereinsatzes 10 dargestellt. Das folienartige Filtermedium wird durch einen ersten Walzenspalt 51, der von zwei Walzen 49 gebildet wird, gezogen, wobei beim Walzspaltdurchtritt durch entsprechende Formung der Walzenoberfläche 50 Vorsprüngen 30 entsprechende Übergangsbereiche 36 und Faltenkanten in das folienartige Filtermedium 10 eingeprägt werden sowie anschließend durch einen zweiten Walzspalt 53 gezogen wird, der von zwei weiteren Walzen 52 gebildet wird, die eine glatte, mit Klebstoff 38 beschichtete Walzoberfläche aufweisen, wobei die Bereiche der maximalen Erhebungen der Vorsprünge 36 mit Klebstoffmaterial 38 auf der den Walzen 52 zugewandten Fläche beschichtet werden. Hierbei werden ausschließlich die Berührungsbereiche mit Kleber beschichtet.

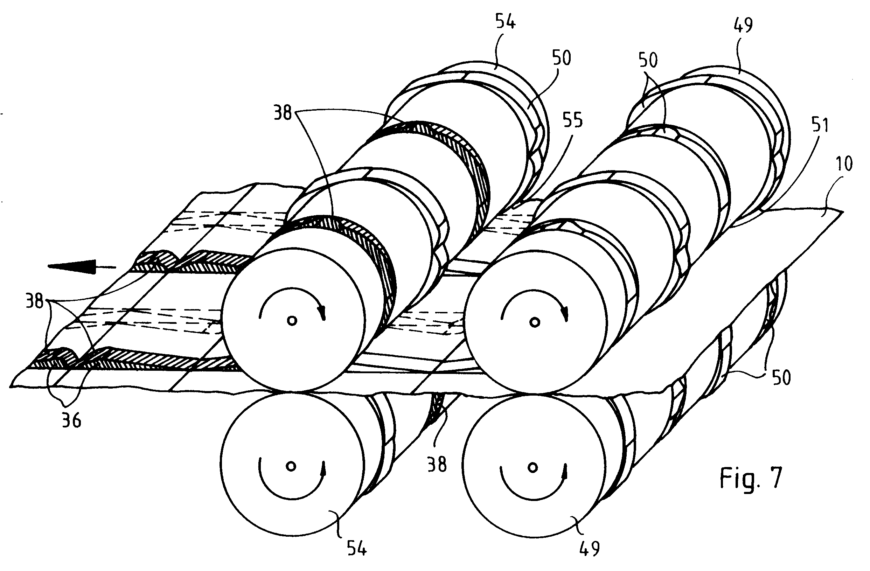

In Figur 7 wird eine andere Verfahrensvariante zur Herstellung eines Filtereinsatzes dargestellt. Das folienartige Filtermedium 10 wird hierbei zunächst durch einen Walzenspalt 51, der von zwei Walzen 49 gebildet wird, gezogen, wobei beim Walzspaltdurchtritt durch entsprechende Formung der Walzenoberflächen 50 Vorsprüngen 30 entsprechende Übergangsbereiche 36 und Faltenkanten in das folienartige Filtermedium 10 eingeprägt werden sowie anschließend durch einen weiteren Walzspalt 55 gezogen, der von zwei weiteren Walzen 54 gebildet wird, deren Oberflächen 50 den Vorsprüngen 30 angepaßt und mit Klebstoff 38 beschichtet sind, wobei beim Walzspaltdurchtritt den Walzen 54 zugewandte Bereiche der Erhebungen mit Klebstoffmaterial 38 beschichtet werden. Insbesondere werden hierbei die gesamten Erhebungsbereiche mit Kleber beschichtet und damit nach dessen Aushärten ausgesteift.

Weiterhin weisen dabei die Oberflächen 50 der zweiten Walzen 54 tangentiale, dem Querschnitt der Vorsprünge 30 angepaßte Nuten auf oder die Oberflächen 50 der zweiten Walzen 54 weisen tangentiale, dem Oberflächenform der Vorsprünge 30 angepaßte Aussparungen auf. In vorteilhafter Weiterbildung sind die zweiten Walzen 54 derart exzentrisch gelagert oder durch Nockenwellen angetrieben, daß sie der Keilform der Oberflächen der Vorsprünge 30 beim Durchlauf des Walzgutes 10 folgen. Hierdurch lassen sich auch die keilförmigen Bereiche günstig mit Klebstoff 38 beschichten.

Bei einer anderen Variante dieses Herstellungsverfahrens unterscheiden die ersten 49 und die zweiten Walzen 54 sich in der Formgebung der die Seitenwandungen 300 der Vorsprünge 30 aufnehmenden Bereiche 50 in der Weise, daß die zweiten Walzen 54 einen im Vergleich zu den ersten Walzen 49 zum Gipfelbereich der Ausnehmungen 50 hin zunehmenden Ausnehmungsquerschnitt zur Aufnahme der Vorsprünge 30 aufweisen, so daß der Kleberauftrag zum Gipfelbereich hin zunimmt und hier eine große Festigkeit erreicht wird.

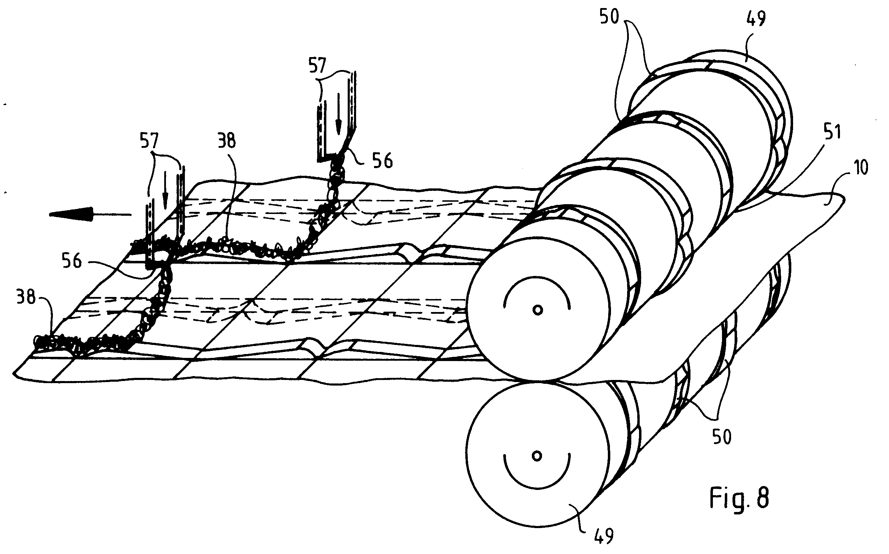

In Figur 8 wird ein weiteres Verfahren zur Herstellung eines Filtereinsatzes 10 dargestellt. Das Filtermaterial 10 wird bei der Bearbeitung zunächst durch einen ersten Walzenspalt 51, der von zwei Walzen 49 gebildet wird, gezogen. Anschließend werden beim Walzspaltdurchtritt durch entsprechende Formung der Walzenoberfläche 50 Vorsprünge 30, entsprechende Übergangsbereiche 36 und Faltenkanten 35 in das folienartige Filtermaterial 10 eingeprägt. Das Klebstoffmaterial 38 wird dann bereichsweise auf das Filtermaterial 10 aufgetragen, wobei das Klebstoffmaterial 38 kontinuierlich aus zwei oberhalb des Filtermaterials 10 angeordnete Düsen 56 austritt. Die Düsen 56 werden dabei mit Gas 57, insbesondere Heißgas, umströmt, so daß sich ein das Klebstoffmaterial 38 bewegende Gaswirbel bildet und das Klebstoffmaterial 38 dadurch netz- bzw. gespinstartige auf das kontinuierlich unter den Düsen 56 sich fortbewegende Filtermaterial 10 aufgebracht wird. In einfacher Weise kann somit der netz- bzw. gespinstartige Klebstoff aufgebracht werden.

In einem weiteren, hier nicht dargestellten, Ausführungsbeispiel weist das Filtermaterial 10 aus thermoplastischen Werkstoff bestehende Fasern auf. Die thermoplastischen Fasern sind dabei in einem solchen Anteil enthalten, daß das Filtermaterial 10 mittels lokaler thermischer Behandlung bereichsweise verschweißt und somit in sich selbst verdichtet bzw. ausgesteift und mit gleichartigem Material verbunden ist.

Die Faltenkanten 23 bis 29 sind durch entsprechende Druck-und/oder Temperaturbedingungen verursachtes Verschweißen von Fasern erzeugt und weisen jeweils die Form eines Filmscharniers auf. Die Fasern sind dabei ohne wesentliche Hohlräume miteinander verbunden. Das durchlässige Filtermaterial 10 ist weiterhin mehrlagig ausgebildet. Die äußeren Lagen bestehen aus Polypropylen, also aus thermoplastischem Werkstoff. Durch diese Ausbildung können die Filtereigenschaften den Anforderungsbedingungen des Herstellungsprozesses sowie des Filterprozesses durch thermische Behandlung angepaßt werden. Dadurch werden sowohl die äußeren Lagen als auch das innere Filtermedium gesteift. Die zunächst durch den vorangehenden Prägevorgang geringfügig instabil gewordene Wandung der Vorsprünge 30 ist dabei durch die thermische Behandlung wieder ausgesteift worden.

## Patentansprüche

1. Filtereinsatz, in insbesondere quaderförmiger Ausbildung, bestehend aus einer Vielzahl von in zick-zack-förmiger Faltung angeordneten Faltenwänden (15-22; 40, 41, 43, 44) für ein in Richtung von einem Kantenbereich (13) der Zick-Zack-Faltung in Richtung auf den gegenüberliegenden Kantenbereich (14) der Faltung durch den Einsatz hindurchtretendes zu filterndes Medium, bestehend aus einem für das zu filternde Medium durchlässigen Material (10) mit aus jeder Faltenwand in Richtung auf eine benachbarte Faltenwand vortretenden, durch Prägung erzeugten Vorsprüngen (30; 45), wobei die Vorsprünge einander benachbarter Faltenwände zur Abstandssicherung und Aussteifung aneinander angrenzen,
**dadurch gekennzeichnet,**
daß die einander zugewandten Vorsprünge (30, 45) einander benachbarter Faltenwände (15 bis 22, 40, 41, 43, 44) miteinander verklebt sind.

2. Filtereinsatz nach Anspruch 1, **dadurch ge****kennzeichnet,** daß die einander zugewandten Vorsprünge (30, 45) der benachbarten Faltenwände (15 bis 22, 40, 41, 43, 44), aneinander anliegende Flächenbereiche aufweisen und/oder die Vorsprünge (30, 45) einander benachbarter Faltenwände (15 bis 22, 40, 41, 43, 44) linienförmig aneinandergrenzen, wobei Klebstoff im Bereich dieser Linien aufgetragen ist und insbesondere die aneinander einander grenzendenden Vorsprünge (30, 45) bzw. endlos über die Faltenkanten (35) und die den Filtereinsatz (11) nach außen begrenzende Faltenwänden verläuft.

3. Filtereinsatz nach einem der vorangehenden Ansprüche, **gekennzeichnet durch** eine die Vorsprünge (30, 45) aussteifende, aushärtbare Beschichtung (38) und/oder Tränkung (38), die sich vorzugsweise auf die Seitenwandungen (300) der Vorsprünge (30, 45) erstreckt und/oder in ihrer örtlichen Beschichtungsdicke bzw. Intensität mit dem Abstand der Erhebung der Vorsprünge (30, 45) bezogen auf die Ebene der Faltenwand (15 bis 22, 40, 41, 43, 44) zunimmt.

4. Filtereinsatz nach einem der vorangehenden Ansprüche, **dadurch gekennzeichnet,** daß die Beschichtung (38) bzw. Tränkung (38) aus einem Klebstoffmaterial besteht und insbesondere netz- bzw. gespinstartig ausgebildet ist und/oder im Bereich der Vorsprünge (30, 45) vorgesehen ist.

5. Filtereinsatz nach einem der vorangehenden Ansprüche, **gekennzeichnet durch** mindestens einen den Filtereinsatz (11) durch Verbindung jeweils benachbarter Faltenkanten (35) stabilisierenden Faden (39), der auf Faltenkanten (35) anliegt und im wesentlichen senkrecht zu den Faltenkanten (35) gerichtet ist und/oder derart angeordnet ist, daß er zwischen zwei benachbarten Kanten (35) in gerader Richtung entlang der Stirnseiten der dort aneinander grenzendenden Vorsprünge (30, 45) bzw. endlos über die Faltenkanten (35) und die den Filtereinsatz (11) nach außen begrenzende Faltenwänden verläuft.

6. Filtereinsatz nach Anspruch 5, **dadurch gekennzeichnet,** daß der den Filtereinsatz (11) stabilisierende Faden (39) im Bereich der den Filtereinsatz (11) nach außen begrenzenden Faltenwände eine Führung zum Einschieben des Filtereinsatzes (11) in ein Filtergehäuse (12) bildet.

7. Filtereinsatz nach einem der vorangehenden Ansprüche, **dadurch gekennzeichnet,** daß der den Filtereinsatz (11) stabilisierende Faden (39) aus einem schäumenden, klebenden und/oder sich verfestigenden Kunststoff besteht.

8. Filtereinsatz nach einem der vorangehenden Ansprüche, **dadurch gekennzeichnet,** daß die Faltenkanten (35) im Faltengrund trapezartig verbreitert ausgebildet sind.

9. Filtereinsatz nach einem der vorangehenden Ansprüche, **dadurch gekennzeichnet,** daß das durchlässige Filtermaterial (10) aus einem thermoplastischen Werkstoff bestehende Fasern, insbesondere bestehend mindestens aus Faseranteilen von Polypropylen, Cellulose, Polycarbonat, Polyamid, Teflon und/oder Polyester, enthält, welche durch Verschweißung das Material in sich selbst verdichten bzw. aussteifen oder mit entsprechendem Material verbinden und insbesondere nahtförmige Bereiche vorgesehen sind, in denen die Fasern ohne wesentliche Hohlräume miteinander verbunden sind und/oder das durchlässige Filtermaterial (10) mehrlagig ausgebildet ist, wobei einzelne Lagen bereichsweise miteinander verschweißt sind.

10. Filtereinsatz nach Anspruch 9, **dadurch gek****ennzeichnet,** daß die äußeren Lagen aus thermoplastischem Material bestehen und insbesondere zur Erzeugung der nahtförmigen Bereiche direkt miteinander verschweißt sind und/oder die nahtförmig verschweißten Bereiche als Filmscharnier ausgebildet sind.

11. Verfahren zur Herstellung eines Filtereinsatzes nach Anspruch 1, wobei das für das zu filternde Medium durchlässige Material
durch einen ersten Walzenspalt, der von zwei Walzen gebildet wird, gezogen wird,
wobei
beim Walzspaltdurchtritt durch entsprechende Formung der Walzenoberfläche Vorsprüngen (30, 45) entsprechende Übergangsbereiche (36) und Faltenkanten (35) in das folienartige Filtermedium eingeprägt werden,
dadurch gekennzeichnet, daß das Material anschließend durch einen zweiten Walzspalt gezogen wird, der von zwei weiteren Walzen gebildet wird, die eine derart mindestens abschnittsweise mit Klebstoff beschichtete Walzoberfläche aufweisen, daß die Bereiche der maximalen Erhebungen der Vorsprünge auf der den Walzen zugewandten Fläche mit Klebstoffmaterial beschichtet werden.

12. Verfahren nach Anspruch 11, **dadurch gekennzeichnet**, daß das Material in zweiten Schritt
durch einen Walzspalt gezogen wird, der von zwei weiteren Walzen gebildet wird, deren Oberflächen den Vorsprüngen (30; 45) angepaßt und mit Klebstoff beschichtet sind, wobei beim Walzspaltdurchtritt den Walzen zugewandte Bereiche der Erhebungen mit Klebstoffmaterial beschichtet werden.

13. Verfahren nach Anspruch 12, **dadurch gekennzeichnet,** daß die Oberflächen der zweiten Walzen tangentiale, dem Querschnitt der Vorsprünge angepaßte Nuten und/oder tangentiale, dem Oberflächenform der Vorsprünge angepaßte Aussparungen aufweisen.

14. Verfahren nach den Ansprüchen 11 oder 12, **dadurch gekennzeichnet,** daß die zweiten Walzen derart exzentrisch gelagert oder durch Nockenwellen angetrieben sind, daß ihre Mantelabwicklung beim Durchlauf des Walzgutes der Keilform der Oberflächen der Vorsprünge entspricht.

15. Verfahren nach einem der Ansprüche 11 bis 14, **dadurch gekennzeichnet,** daß die ersten und die zweiten Walzen sich in der Formgebung der die Seitenwandungen der Vorsprünge aufnehmenden Bereiche in der Weise unterscheiden, daß die zweiten Walzen einen im Vergleich zu den ersten Walzen zur höchsten Erhebung der Ausnehmungen hin zunehmenden Ausnehmungsquerschnitt zur Aufnahme der Vorsprünge aufweisen als die ersten Walzen, so daß der Kleberauftrag zur höchsten Erhebung hin zunimmt.

16. Verfahren zur Herstellung eines Filtereinsatzes nach Anspruch 1, wobei das für das zu filternde Medium durchlässige Material
durch einen Walzenspalt, der von zwei Walzen gebildet wird, gezogen wird,
wobei
beim Walzspaltdurchtritt durch entsprechende Formung der Walzenoberfläche Vorsprüngen (30, 45) entsprechende Übergangsbereiche (36) und Faltenkanten (35) in das folienartige Filtermedium eingeprägt werden,
dadurch gekennzeichnet, daß
anschließend das Klebstoffmaterial bereichsweise auf das Filtermedium aufgetragen wird, wobei das Klebstoffmaterial kontinuierlich aus einer oberhalb des Filtermaterials (10) angeordneten Düse austritt und die Düse mit Gas, insbesondere Heißgas, umströmt wird, so daß sich ein das Klebstoffmaterial bewegender Gaswirbel bildet und das Klebstoffmaterial dadurch netz- bzw. gespinstartige auf das kontinuierlich unter der Düse sich fortbewegende Filtermaterial aufgebracht wird.

## Claims

1. Filter element, in particular of cuboid-shaped construction, consisting of a multiplicity of pleat walls (15-22; 40, 41, 43, 44) arranged in zig-zag-shaped pleating, for a medium to be filtered which passes through the element in the direction from one edge region (13) of the zig-zag pleating in the direction of the opposite edge region (14) of the pleating, consisting of a material (10) permeable to the medium to be filtered with projecting parts (30; 45) jutting out of each pleat wall in the direction of an adjacent pleat wall and produced by stamping, in which the projecting parts of mutually adjacent pleat walls butt against one another in order to ensure spacing and provide reinforcement, characterised in that the projecting parts (30, 45) facing one another of mutually adjacent pleat walls (15 to 22, 40, 41, 43, 44) are stuck to one another.

2. Filter element according to claim 1, characterised in that the projecting parts (30, 45) facing one another of the adjacent pleat walls (15 to 22, 40, 41, 43, 44) comprise surface regions butting against one another and/or the projecting parts (30, 45) of mutually adjacent pleat walls (15 to 22, 40, 41, 43, 44) butt against one another in a line shape, adhesive being applied in the region of said lines and in particular to the projecting parts (30, 45) bordering one another or running continuously over the pleat edges (35) and the pleat walls bounding the filter element (11) outwardly.

3. Filter element according to any one of the preceding claims, characterised by a curable coating (38) and/or impregnation (38) reinforcing the projecting parts (30, 45), which preferably extends onto the side walls (300) of the projecting parts (30, 43) and/or increases in its local coating thickness or intensity with the spacing of the elevations of the projecting parts (30, 45) referred to the plane of the pleat wall (15 to 22, 40, 41, 43, 44).

4. Filter element according to any one of the preceding claims, characterised in that the coating (38) or impregnation (38) consists of an adhesive material and in particular is formed after the manner of a net or web and/or is provided in the region of the projecting parts (30, 45).

5. Filter element according to any one of the preceding claims, characterised by at least one thread (39) stabilizing the filter element (11) by the connection of mutually adjacent pleat edges (35), which butts against pleat edges (35) and is directed in the main perpendicularly to the pleat edges (35) and/or is arranged in such a way that it runs between two adjacent edges (35) in a straight direction along the front ends of the projecting parts (30, 45) bordering one another there or continuously over the pleat edges (35) and the pleat walls bounding the filter element (11) outwardly.

6. Filter element according to claim 5, characterised in that the thread (39) stabilizing the filter element (11) forms, in the region of the pleat walls bounding the filter element (11) outwardly, a guide for the insertion of the filter element (11) into a filter housing (12).

7. Filter element according to any one of the preceding claims, characterised in that the thread (39) stabilizing the filter element (11) consists of a foaming, adhering and/or compacting plastics material.

8. Filter element according to any one of the preceding claims, characterized in that the pleat edges (35) are formed expanded at the pleat bottom after the manner of a trapezium.

9. Filter element according to any one of the preceding claims, characterised in that the permeable filter material (10) contains fibres consisting of a thermoplastic material, in particular consisting at least of fibre contents of polypropylene, cellulose, polycarbonate, polyamide, Teflon and/or polyester, which by welding compress or strengthen the material in itself or connect it to corresponding material and in particular seam-like regions are provided in which the fibres are connected to one another without significant cavities and/or the permeable filter material (10) is constructed in a plurality of layers, with individual layers being welded to one another to form regions.

10. Filter element according to claim 9, characterised in that the outer layers consist of thermoplastic material and in particular are welded directly to one another to produce the seam-like regions and/or the regions welded like seams are constructed as film hinges.

11. Method for the manufacture of a filter element according to claim 1, in which the permeable material for the medium to be filtered is drawn through a first roller gap which is formed by two rollers, in which during the passage through the roller gap, by corresponding shaping of the roller surface, transition zones (36) corresponding to projecting parts (30, 45) and pleat edges (35) are stamped into the film-type filter medium, characterised in that the material is then drawn through a second roller gap which is formed by two further rollers which comprise a roller surface coated with adhesive at least in sections, in such a way that the regions exhibiting the maximum elevations of the projecting parts are coated on the surface facing the rollers with adhesive material.

12. Method according to claim 11, characterised in that the material is in the second step drawn through a roller gap which is formed by two further rollers whose surfaces are adapted to the projecting parts (30, 45 ) and are coated with adhesive, in which, during the passage through the roller gap, regions of the elevations, namely those facing the rollers, are coated with adhesive material.

13. Method according to claim 12, characterised in that the surfaces of the second rollers comprise tangential grooves adapted to the cross-section of the projecting parts and/or tangential recesses adapted to the surface shape of the projecting parts.

14. Method according to claim 11 or 12, characterised in that the second rollers are mounted eccentrically or driven by camshafts in such a way that their sleeve development corresponds during the passage of the rolled material to the wedge shape of the surfaces of the projecting parts.

15. Method according to any one of claims 11 to 14, characterised in that the first and the second rollers differ in the configuration of the regions receiving the side walls of the projecting parts in such a way that the second rollers exhibit a recess cross-section for receiving the projecting parts which in comparison with the first rollers increases towards the highest elevation of the recesses than the first rollers, so that the application of adhesive increases towards the highest elevation.

16. Method for manufacturing a filter element according to claim 1, in which the material permeable to the medium to be filtered is drawn through a roller gap which is formed by two rollers, in which during the passage through the roller gap, by corresponding forming of the roller surface, transition zones (36) corresponding to projecting parts (30, 45) and pleat edges (35) are stamped into the film-type filter medium, characterised in that after this the adhesive material is applied to the filter medium by regions, the adhesive material escaping continuously from a nozzle disposed above the filter material (10) and the nozzle being flowed around with gas, in particular hot gas, sc that a swirl of gas moving the adhesive material forms and the adhesive material is thereby applied after the manner of a net or web to the filter material moving continuously beneath the nozzle.

## Revendications

1. Garniture de filtre, notamment de configuration parallélépipédique, composé d'un grand nombre de parois de plis (15 à 22 ; 40, 41, 43, 44) disposées en un plissement en zig-zag, pour un milieu à filtrer qui traverse cet élément dans la direction allant d'une région d'arête (13) du plissement en zig-zag vers la région d'arête opposée (14) du plissement, composé d'une matière (10) perméable pour le milieu à filtrer, comprenant des saillies (30 ; 45) produites par repoussage, qui s'élèvent sur chaque paroi de pli en direction d'une paroi de pli adjacente, les saillies des parois de plis mutuellement adjacentes étant en appui entre elles pour assurer le maintien de l'écartement et le raidissement,
caractérisé,
en ce que les saillies (30, 45) des parois de pli (15 à 22, 40, 41, 43, 44) qui sont adjacentes entre elles sont collées les unes aux autres.

2. Garniture de filtre selon la revendication 1, caractérisée en ce que les saillies (30, 45) des parois de plis (15 à 22, 40, 41, 43, 44) adjacentes, qui sont dirigées les unes vers les autres, présentent des régions de surface en appui les unes contre les autres et/ou les saillies (30, 45) des parois de plis (15 à 22, 40, 41, 43, 44) mutuellement adjacentes sont contiguës de façon linéaire et un adhésif est déposé dans la région de ces lignes et s'étend en particulier les saillies (30, 45) attenantes entre elles, ou sans interruption sur les arêtes (35) des plis et sur les parois des plis qui délimitent la garniture de filtre (11) vers l'extérieur.

3. Garniture de filtre selon une des revendications précédentes, caractérisée par une enduction (38) et/ou imprégnation (38), durcissable, raidissant les saillies (30, 45), qui s'étend de préférence sur les flancs (300) des saillies (30, 35) et/ou s'accroît en épaisseur ou intensité locale d'enduction avec la hauteur d'élévation des saillies (30, 45), mesurée par rapport au plan de la paroi (15 à 22, 40, 41, 43, 44) des plis.

4. Garniture de filtre selon une des revendications précédentes, caractérisée en ce que l'enduction (38) ou imprégnation (38) est composée d'une matière adhésive et se présente en particulier en forme de réseau ou de filet et/ou est prévu dans la région des saillies (30, 45).

5. Garniture de filtre selon une des revendications précédentes, caractérisée par au moins un fil (39) qui stabilise la garniture de filtre (11) en reliant les arêtes de plis adjacentes (35), qui est appuyé sur les arêtes de plis (35) et est orienté sensiblement perpendiculairement aux arêtes (35) des plis et/ou disposé de manière qu'entre deux arêtes (35) adjacentes, il s'étende dans une direction rectiligne, le long des faces frontales des saillies (30, 45) mutuellement attenantes à cet endroit, ou qui s'étende sans interruption sur les arêtes (35) des plis et sur les parois des plis qui délimitent la garniture de filtre (11) vers l'extérieur.

6. Garniture de filtre selon la revendication 5, caractérisée en ce que le fil (39) qui stabilise la garniture de filtre (11) dans la région des parois de plis qui délimitent la garniture de filtre (11) vers l'extérieur forme un guide pour introduire la garniture de filtre (11) dans un boîtier de filtre (12).

7. Garniture de filtre selon une des revendications précédentes, caractérisée en ce que le fil (39) qui stabilise la garniture de filtre (11) est composé d'une matière plastique moussante, adhésive et/ou qui se solidifie.

8. Garniture de filtre selon une des revendications précédentes, caractérisée en ce que les arêtes (35) des plis sont d'une configuration qui s'élargit en trapèze au fond des plis.

9. Garniture de filtre selon une des revendications précédentes, caractérisée en ce que la matière filtrante perméable (10) est formée de fibres elles-mêmes composées d'une matière thermoplastique, en particulier au moins composées de composants de fibres de polypropylène, cellulose, polycarbonate, polyamide, Téflon et/ou polyester, qui, par soudage, densifient ou raidissent la matière elle-même ou l'assemblent à une matière correspondante, et, en particulier, il est prévu des régions en forme de joints dans lesquelles les fibres sont assemblées entre elles sans cavités notables, et/ou la matière perméable (10) du filtre est réalisée en plusieurs couches, les différentes couches étant soudées les unes aux autres par endroits.

10. Garniture de filtre selon la revendication 9, caractérisée en ce que les couches extérieures sont composées de matière thermoplastique et sont en particulier soudées directement les unes aux autres pour produire les régions en forme de joints et/ou les régions soudées en forme de joints sont réalisées sous la forme de charnières films.

11. Procédé de fabrication d'une garniture de filtre selon la revendication 1, dans lequel on fait passer une matière perméable pour le milieu à filtrer à travers une première fente entre cylindres qui est formée par deux cylindres, des saillies (30, 45) de région correspondante et des arêtes de plis (35) étant repoussées dans le milieu filtrant en feuille pendant le franchissement de la fente entre cylindres sous l'action d'une conformation appropriée de la surface des cylindres, caractérisé en ce que la matière est ensuite tirée à travers une deuxième fente entre cylindres qui est formée par deux autres cylindres qui présentent une surface de cylindre enduite d'adhésif, du moins par endroits, de manière que les régions des protubérances maximales des saillies soient revêtues de matière adhésive sur la surface dirigée vers les cylindres.

12. Procédé selon la revendication 11, caractérisé en ce que, dans une deuxième étape, la matière est tirée à travers une fente entre cylindres qui est formée par deux autres cylindres dont les surfaces sont adaptées aux saillies (30 ; 45) et enduites d'adhésif, les régions des protubérances qui sont dirigées vers les cylindres lors de la traversée de la fente entre cylindres étant enduites d'adhésif.

13. Procédé selon la revendication 12, caractérisé en ce que les surfaces des deuxièmes cylindres présentent des rainures tangentielles adaptées à la section des saillies et/ou des évidements tangentiels adaptés à la forme de surface des saillies.

14. Procédé selon la revendication 11 ou 12, caractérisé en ce que les deuxièmes cylindres sont montés sur paliers excentriques ou entraînés par des arbres à cames, en ce que leur développement circonférentiel lors du passage du produit à laminer correspond à la forme de coin des surfaces des saillies.

15. Procédé selon une des revendications 11 à 14, caractérisé en ce que les premiers cylindres et les deuxièmes cylindres diffèrent les uns des autres par la conformation des régions qui reçoivent les flancs des saillies de telle manière que les deuxièmes cylindres présentent, pour recevoir les saillies, une section d'évidement qui s'accroît comparativement aux premiers cylindres en direction de la protubérance maximale des évidements, de sorte que le dépôt de colle s'accroît en direction de la protubérance maximale.

16. Procédé de fabrication d'une garniture de filtre selon la revendication 1, dans lequel la matière perméable pour le milieu à filtrer est tirée à travers une fente entre cylindres qui est formée par deux cylindres, dans lequel, lors du franchissement de la fente entre cylindres, des saillies (30, 45) des régions de transition correspondantes (36) et des arêtes de plis correspondantes (35) sont repoussées dans le milieu filtrant en feuille sous l'effet d'une conformation appropriée de la surface des cylindres,
caractérisé en ce qu'ensuite, la matière adhésive est déposée par endroits sur le milieu filtrant, la matière adhésive sortant en continu d'une buse disposée au-dessus de la matière filtrante (10) et la buse étant entourée d'un courant de gaz, notamment de gaz chaud, de sorte qu'il se forme un tourbillon de gaz qui met la matière adhésive en mouvement et que la matière adhésive est ainsi déposée en forme de réseau ou de filet sur la matière filtrante qui défile en continu sous la buse.
